# EUROPEAN PATENT APPLICATION

(11) **EP 1 215 932 A1**
(43) Date of publication of application: **19.06.2002**
(21) Application number: 00126845.7
(22) Date of filing: 07.12.2000
(51) Int. Cl.: H04R 1/10, H04M 1/05, H04B 1/38

(54) **Wireless hanging type earphone**

(71) Applicant: EVERSPRING INDUSTRY CO. LTD., Sec. 1, Tu Cheng City, Taipei Hsien (TW)
(72) Inventor: Kao, Eric, Tu Cheng City, Taipei Hsien (TW)
(74) Representative: Viering, Jentschura & Partner

(57) **Abstract**

A wireless hanging type earphone formed by two lobes (11,12) of a casing is disclosed. An inner side of the earphone body has a speaking portion (123) at a position with respect to the ear cavity. A lower end thereof has a microphone. The position between an ear-hook (3) and the earphone body is adjustable by a pivotal shaft (4) for searching for an orientation in communication. An inner part of the earphone body is installed with a receiving and transmitting circuit (2) so that the signals of a mobile phone are transferred to the earphone by wireless transmission. The water drop type wireless hanging type earphone has an antenna in the hook (3) so that the receiving of signal retains the power without reduction due to decrement of a volume. In the present invention, by a water drop shape and the design of the inner circuit board, the microphone with a portion extending to the mouth is reduced. Furthermore, the sound receiver and transmitter are concentrated on the earphone structure. Although the two are near, no interference occurs and unclearness occurs.

## Description

### FIELD OF THE INVENTION

The present invention relates to a wireless hanging type earphone, and especially to a hanging type earphone with an antenna hidden in the earphone so that the whole structure is compact and thus can be carried conveniently.

### BACKGROUND OF THE INVENTION

Under the confinement of law, the driver is not allowed to communicate by holding a mobile phone during driving. Therefore, there are many products being produced. One product is a hand free kit. Thereby, a mobile phone can be place thereon. As a call occurs, the message can be emitted from a speaker in the car, but this device has many disadvantages as described in the following:
1. A trumpet is necessary to match the hand free kit so that the assembled wires and devices are hidden. This is inconvenient for maintenance, updating or removing.
2. A kind of hand fee kit is inserted into a firing seat of a car, thus, the normal operation of the seat is destroyed. The extending receiver is occupied the space of a car so as to hindered the operations, such as braking. Furthermore, in driving, it is often to adjust the orientation of the mobile phone so as to hindered the operation of the driver.
3. A speak is necessary so as not to be suitable for secret talking. If a wire receiver is used, the wire is very inconvenient in the space within a car.

### SUMMARY OF THE INVENTION

Accordingly, the primary object of the present invention is to provide a wireless hanging type earphone for receiving and transmitting outer signals, the signal of a mobile phone is transferred to the transceiver of the wireless hanging type earphone according to the present invention.

Another object of the present invention is to provide a wireless hanging type earphone, by a water drop shape and the design of the inner circuit board, the microphone with a portion extending to the mouth is reduced so as to be carried conveniently.

A further object of the present invention is to provide a wireless hanging type earphone, wherein the water drop type wireless hanging type earphone has an antenna in the hook so that the receiving of signal retains the power without reduction due to decrement of a volume.

A still object of the present invention is to provide a wireless hanging type earphone, wherein the beautiful color causes the user to be more convenient in use. By the pivotal shaft, hook, and the slide track, the wireless earphone can be adjusted to a preferred position.

To achieve the objects, the present invention provides a wireless hanging type earphone formed by two lobes of casings. An inner side of the earphone body having a speaking portion at a position with respect to the ear cavity. A lower end thereof has a microphone. The position between the hook and the earphone body is adjustable by a pivotal shaft for searching for an orientation in communication. An inner part of the earphone body is installed with a receiving and transmitting circuit so that signals of a mobile phone are transferred to the earphone by wireless transmission. The water drop type wireless hanging type earphone has an antenna in the hook so that the receiving of signal retains the power without reduction due to decrement of a volume.

The various objects and advantages of the present invention will be more readily understood from the following detailed description when read in conjunction with the appended drawing.

### BRIEF DESCRIPTION OF THE DRAWINGS

Fig. 1A is an exploded perspective view of the wireless hanging type earphone according to the present invention.
Fig. 1B is an inner view of a wireless hanging type earphone in the present invention.
Fig. 2 is an assembled perspective view of the wireless hanging type earphone in the present invention.
Fig. 3 is an enlarger view of the pivotal shaft of the wireless hanging type earphone according to the present invention.
Fig. 4 shows an application of a wireless hanging type earphone.

### DETAILED DESCRIPTION OF THE PREFERRED EMBODIMENTS

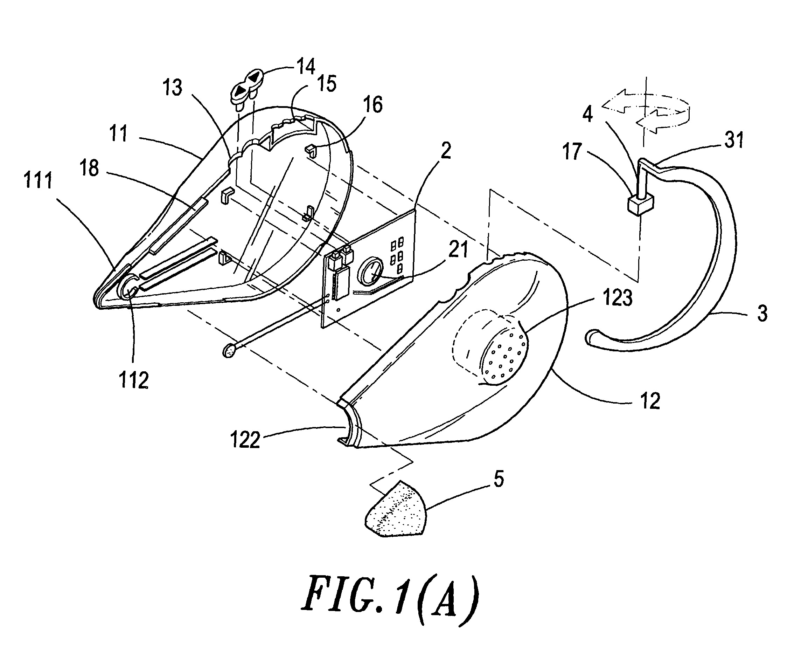

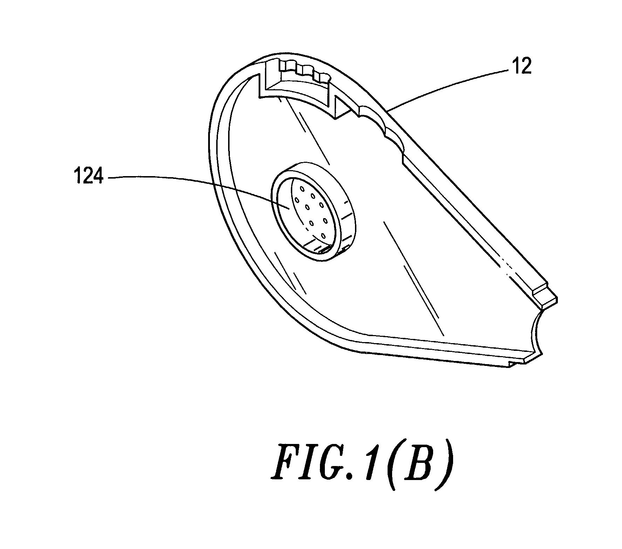

Referring to Fig. 1, the wireless hanging type earphone of the present invention is illustrated. The wireless hanging type earphone according to the present invention includes two lobes of casings 11, 12 as a water drop which are combined as a housing, and holes 13 are formed at lateral sides thereof. The holes have volume controller 14. Two casings 11, 12 extend to the front portions 111 and 121 which are installed with microphone chambers 112, 122 . The microphone chambers 112, 122 are installed with microphones. The inner casing thereof is combined with a soft material 5 with good quality in sound collection. Therefore, in communication, the sound can be concentrated. A connecting end 15 is installed in a proper place of the casing 1 for being pivotally connected to a hook 3.

A speaking portion 123 is installed on the casing 12 and at a position near the ear with respect to the cavity. The speaking portion 123 protrudes outwards slightly. Thereby, the speaking portion 123 can be located near the ear cavity so that sound can be more concentrated and the sound can be heard more clearly. A sound collecting channel 124 is installed within the casing 12 at a respective position of the speaking portion (referring to Fig. 1B). The sound collecting channel 124 serves to cause the sound to be transmitted directly and to reduce the attenuation of sound frequency so that the original sound can be present to the ear of the listener.

The two casings 11, 12 are combined by tenons. The circuit board 2 is installed between the two casings 11, 12. A retainer 16 is used to fix the circuit board 2 so as not to swing with the shake of the earphone. A speaker 21 is installed on the circuit board 2 at position with respect to the speaker 123 and sound collecting channel 124 of the casing so as to further enhance the sound.

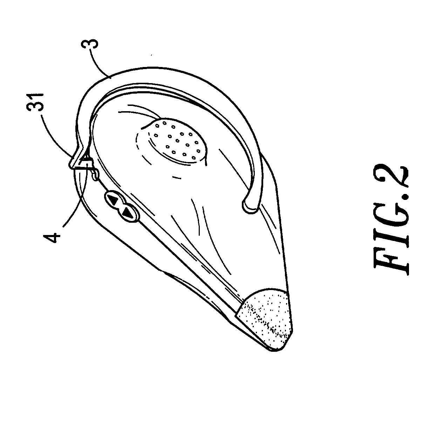

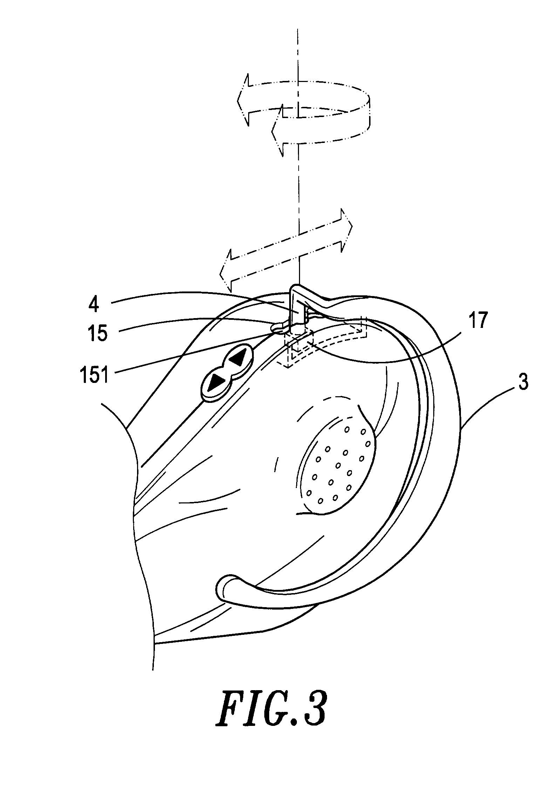

Referring to Figs. 2 and 3, the hook 3 is connected to a pivotal shaft 4 by a connecting end 31. The pivotal shaft 4 is further connected to the connecting end 17 of the earphone body. The shifting of the earphone in the front and rear direction can be adjusted by the hook 3 and through the pivotal shaft 4 and the connecting end 31. The material of the inner side of the hook 3 is a flexible metal and a layer of elastomer enclosed thereon. Therefore, the curvature of the hook 3 can be adjusted as desired so as to be formed with a shape suitable of the user. The antenna for receiving and transmitting signal is installed on the hook 3 or in the casing so that the signal does not attenuate due to the reduction of the signal.

Referring to Fig. 3, the connecting end of the earphone body may be formed as a sliding track for being moved by a pivotal shaft 4, but the sliding distance is confined. It has a structure comprising following components. A pivotal shaft 4 with a larger diameter and the lower end thereof is installed with a connecting end 17. The sliding track on the casing is a sealing teeth shape track. If the pivotal shaft 4 is pushed forwards slightly, or is adjusted to the fixing point 151, or is fixed to a proper position. A teeth shape elastomer encloses around the sliding track so as to increase the friction force as the pivotal shaft 4 slides. The position connected the pivotal shaft 4 and the hook 3 may rotate horizontally by a shaft. Therefore, the user may fine-adjust the angle and distance of the earphone so as to fit the ear shape, face width. Therefore, the wireless hanging type earphone of the present invention has a function of three-dimensional adjustment.

In the present invention, by a water drop shape and the design of the inner circuit board, the microphone with a portion extending to the mouth is reduced. Furthermore, the sound receiver and transmitter are concentrated on the earphone structure. Although the two are near, no interference occurs and unclearness occurs. Moreover, the antenna is wound around the hook. The effect of signal receiving will not deteriorate due to the volume reduction. Another, the metal material in the hook can be used as receiving medium and reduce the cost of the material.

Referring to Fig. 1, the vehicle used hand free receiver, a wire wireless hanging type earphone, a wire cover type earphone and the wireless hanging type earphone of the present invention are compared, the result is illustrated in the table 1.

**TABLE 1**

| | Advantages | Disadvantages |
|---|---|---|
| Vehicle used hand free receiver | 1. Safety in driving. | 1. Wiring causes the arrangement difficulty in the vehicle. |
| | 2. Steady power supply. | |
| | | 2. The firing seat in a vehicle is easy to be destroyed and the contact is bad. |
| | | 3. Bad operation space in the car. |
| | | 4. High assembling cost. |
| Wired wireless hanging type earphone | 1. convenience | 1. Difficult in receiving and transmitting. |
| | | 2. Convenience in bank wire. |
| | | 3. Bad communication quality. |
| | | 4. Easy destroy and breaking. |
| Wire cover type earphone | 1. Cheap | 1. Difficult to place a telephone. |
| | 2. Convenience in receiving and transferring | |
| | | 2. Bad communication quality. |
| wireless hanging type earphone of the present invention | 1. Wireless transmission. | No. |
| | 2. Low power | |
| | 3. Convenience in receiving and transmitting. | |
| | 4. No bank wire, space is saved. | |
| | 5. Water drop shape, difficult to be destroyed or broken. | |
| | 6. Good communication quality. | |
| | 7. Privacy | |

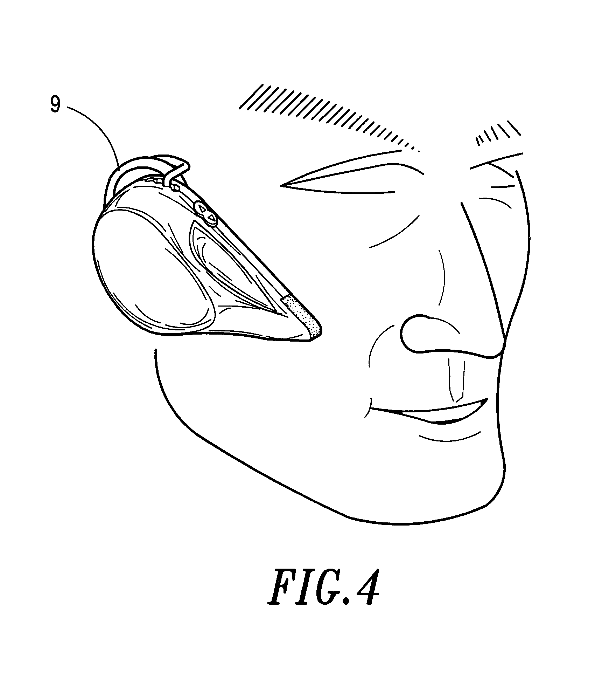

Referring to Fig. 4, it is shown that as the wireless hanging type earphone of the present invention is hung on the ears 6, the special water drop type outlook matches the requirement of the trend. Furthermore, the beautiful color causes the user to be more convenient in use. By the pivotal shaft, hook, and the slide track, the wireless earphone can be adjusted to a preferred position.

The wireless hanging type earphone of the present invention has the following advantages:

After the position of the microphones is reduced, the possibility of a wireless earphone being broken is decreased greatly because in the prior art, the part of wireless earphone extending to the microphone is weaker, it is easy to break as the user is careless. Therefore, the water drop shape greatly reduces to zero.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A wireless hanging type earphone for receiving and transmitting signal in a preset range so as to execute a speech communication, comprising:
an earphone body having a shape like a water drop, an inner side of the earphone body having a speaking portion at a position with respect to the ear cavity, a lower end thereof having a microphone having a connecting end to the hook;
a soft and flexible hook for supporting the earphone body and for hanging the earphone body; the hook being adjusted by a pivotal shaft; the arc of the hook being adjusted so as to fit a shape of ears; the hook being connected to the earphone body by an connecting end; and
a pivotal shaft being a connected portion between the earphone body and the hook so as to assist the two to be combined more tightly.

2. The wireless hanging type earphone as claimed in claim 1, wherein the speaking portion is a protrusion near the ear cavity, thereby, the speaking portion is positioned to be near the ear cavity for receiving voice clearly.

3. The wireless hanging type earphone as claimed in claim 1, wherein a material of an inner part of the hook is a flexible metal, and an elastomer encloses therearound.

4. The wireless hanging type earphone as claimed in claim 1, wherein the connecting end is a moveable slide track for being moved by the pivotal shaft in a limit length, a lower end of the pivotal shaft is installed with a cylinder with a larger diameter, and the connecting end is an equal space tight closed sliding track, when the distance is necessary to be adjusted, by the elastic of an earphone casing, the pivotal shaft is adjusted forwards or backwards so as to be fixed to a proper position.

5. The wireless hanging type earphone as claimed in claim 1, wherein the casing has a tubular sound collecting channel serving to cause the sound to be transmitted directly and to reduce the attenuation of sound frequency so that the original sound can be present to the ear of the listener.

6. The wireless hanging type earphone as claimed in claim 4, wherein a teeth shape elastomer encloses around the sliding track so as to increase the friction force as the pivotal shaft slides.

7. A wireless hanging type earphone formed by two lobes of casings; an inner side of the earphone body having a speaking portion at a position with respect to the ear cavity, a lower end thereof having a microphone; a position between the hook and the earphone body being adjustable by a pivotal shaft for searching for an orientation in communication; an inner part of the earphone body being installed with a receiving and transmitting circuit so that signals of a mobile phone are transferred to the earphone by wireless transmission, **characterized in that** the water drop type wireless hanging type earphone has an antenna in the hook so that the receiving of signal retains the power without reduction due to decrement of a volume.

8. A wireless hanging type earphone for receiving and transmitting signal in a preset range so as to execute a speech communication, comprising:
an earphone body having a shape like a water drop, an inner side of the earphone body having a speaking portion at a position with respect to the ear cavity, a lower end thereof having a microphone having a connecting end to the hook;
a soft and flexible hook having a metal material as a medium for signal receiving, a layer of elastomer enclosing thereon, a pivotal shaft serving to adjust the position thereof, and an arc of the hook being adjustable; and
a pivotal shaft being a connected portion between the earphone body and the hook so as to assist the two to be combined more tightly.
